## Europäisches Patentamt

## European Patent Office

## Office européen des brevets

(11) Veröffentlichungsnummer: **0 037 512**
**A1**

(12) # EUROPÄISCHE PATENTANMELDUNG

(21) Anmeldenummer: **81102197.1**

(22) Anmeldetag: **24.03.81**

(51) Int. Cl.³: **B 60 C 27/04**

(30) Priorität: **26.03.80 DE 3011731**

(43) Veröffentlichungstag der Anmeldung:
**14.10.81 Patentblatt 81/41**

(84) Benannte Vertragsstaaten:
**AT CH DE FR IT LI**

(71) Anmelder: **Lücke, Hanns**
**Kreuzbachweg 1**
**D-8100 Garmisch-Partenkirchen(DE)**

(72) Erfinder: **Lücke, Hanns**
**Kreuzbachweg 1**
**D-8100 Garmisch-Partenkirchen(DE)**

(74) Vertreter: **Huss, Carl-Hans, Dipl.-Ing. et al,**
**Rathausstrasse 14**
**D-8100 Garmisch-Partenkirchen(DE)**

(54) **Reifenklammer zur Verhinderung des Durchdrehens der Antriebsräder von Kraftfahrzeugen.**

(57) Reifenklammer zur Verhinderung des Durchdrehens der Antriebsräder von Kraftfahrzeugen mit mehreren auf der Aussenseite der Felge (20) etwa radial verlaufenden und die Lauffläche (26) des Reifens umgreifenden Greifarmen (16) und einem Mittelstück (402) mit mindestens drei in einer gemeinsamen Ebene angeordneten Führungsteilen, wobei die einander gegenüberliegenden seitlichen (404, 406 bzw. 450, 452) zu dem jeweiligen mittleren Führungsteil (408 bzw. 486) um Drehlager (454, 456) schwenkbar und das Ende (34) eines Greifarms (16) führend mit diesem verbunden sind. Das mittlere Führungsteil (408) kann direkt mit einem Ende eines Greifarms oder mit einem zweiten mittleren Führungsteil (486) verbunden sein. An den schwenkbaren äusseren Führungsteilen (404, 406; 450, 452) können noch weitere Führungsteile ebenfalls in der gemeinsamen Ebene schwenkbar angebracht sein. Zum Ausgleich unterschiedlicher Radund Reifengrössen können leiterartige Einrichtungen wie Bolzen (36) und Hebelspanner (30), Lochleisten oder Spannschrauben (458) vorgesehen sein, während die Dämpfung von Stössen und der Ausgleich der Verformung des Reifens durch Federelemente (460) zwischen den zu verbindenden Teilen erfolgt und Sperren zur Begrenzung des Schwenkwinkels der schwenkbaren Teile Sperren vorgesehen sind, beispielsweise abgeschrägte Enden (474, 476) an den schwenkbaren Teilen die am mittleren Führungsteil (408) anliegen, oder in Form von U-förmigen Doppelwinkeln (489, 492) die in schwenkbaren Teilen (404, 406; 450, 452) eingreifen.

Der die Lauffläche (26) übergreifende Teil (28) des Greifarms (16) kann durch Vorsprünge (44) profiliert oder mit Versteifungswinkeln (46) versteift sein.

FIG. 1

– 1 –

L 211-He

Garmisch-Partenkirchen,
5. März 1981
He/Sh

LÜCKE  Hans
Kreuzbachweg 1
8100 Garmisch-Partenkirchen

Reifenklammer zur Verhinderung des Durchdrehens
der Antriebsräder von Kraftfahrzeugen

---

Die Erfindung betrifft eine Reifenklammer
zur Verhinderung des Durchdrehens der Antriebsräder von Kraftfahrzeugen mit mehreren auf der
Felgenaussenseite etwa radial verlaufenden und
die Lauffläche des Reifens umgreifenden Greifarmen. Derartige Einrichtungen dienen dazu, in
Schnee, Matsch oder schwerem Gelände festgefahrende Kraftfahrzeuge freizufahren, bis sie
wieder festen Untergrund erreicht haben.

Bekannte derartige Reifenklammern sind
technisch sehr aufwendig und daher sehr teuer
und ausserdem nur für Personenkraftwagen geeignet.

– 2 –

Der Erfindung lag daher die Aufgabe zugrunde, eine Reifenklammer der eingangs erwähnten Art zu schaffen, die aus einfachen und stabilen Teilen besteht, auch unter schwierigen Bedingungen leicht zu montieren und bei Nichtgebrauch auf kleinem Raum zu lagern also zusammenklappbar ist. Die einfache Konstruktion ermöglicht dabei eine preiswerte Herstellung, während die grosse Stabilität auch den Einsatz bei Lastkraftwagen ermöglicht.

Diese Aufgabe löst die Erfindung durch eine Reifenklammer der vorgenannten Art, die gekennzeichnet ist durch ein Mittelstück mit mindestens drei in einer gemeinsamen Ebene angeordneten Führungsteilen, wobei die einander gegenüberliegend seitlichen zu dem mittleren um Drehlager in der gemeinsamen Ebene schwenkbar und das Ende je eines Greifarms führend mit diesem verbunden sind.

In dem mittleren Führungsteil kann dabei das Ende eines Greifarms geführt oder es kann über ein Verbindungsteil mit dem mittleren Führungsteil einer zweiten gleichartigen Anordnung verbunden sein oder direkt ein zweites mittleres Führungsteil aufnehmen, an dem ebenfalls wieder mindestens zwei einander gegenüberliegende äussere Führungsteile um Drehlager schwenkbar angebracht sind.

Dabei können an den zu den mittleren Führungsteilen schwenkbaren äusseren Führungsteilen noch weitere Führungsteile ebenfalls in der ge-

- 3 -

meinsamen Ebene schwenkbar angebracht sein.

Zum Ausgleich unterschiedlicher Rad- und Reifengrössen kann die Verbindung zwischen den Greifarmen und den Führungsteilen, z.B. mittels leiterartiger Einrichtungen, wie Bolzen, Lochleisten oder mittels Spannschrauben verstellbar ausgebildet sein. Die Spannschrauben können dabei die mittleren Führungsteile in Längsrichtung durchsetzen, und die Enden der in ihnen geführten Verbindungsteile, der weiteren mittleren Teile bzw. der Greifarme können das entsprechende Muttergewinde aufweisen.

Die Verbindung des Führungsteils mit dem geführten Teil kann auch mittels eines Hebelspanners erfolgen.

Vorzugsweise sind zur Dämpfung von Stössen und zum Ausgleich der Verformung des Reifens zwischen dem Führungsteil und dem in ihm geführten Teil Federelemente vorgesehen, beispielsweise kann die Spannschraube an ihrem äusseren Ende ein Widerlager aufweisen, an dem ein Ende des Federelements anliegt, während das zweite gegen das von der Spannschraube durchsetzte Teil drückt.

Zur Erhöhung der Stabilität können die schwenkbaren Teile des Mittelstücks mit Sperren zur Fixierung des Schwenkwinkels versehen sein, beispielsweise mit abgeschrägten Enden, die sich gegen das mittlere Teil anlegen oder mit an den schwenkbaren Teilen angebrachten einander und

- 4 -

- 4 -

das mittlere Teil übergreifenden Laschen, die
bei ausgeschwenkten Aussenteilen durch die das
mittlere Teil durchsetzende Spannschraube fixiert
werden, oder mit U-förmigen Doppelwinkeln, die
in Löcher, Vertiefungen oder Laschen eingreifen,
die in oder an den schwenkbaren Teilen angebracht sind, wobei die Doppelwinkel, mit einer
Bohrung versehen, auch wieder durch die das
mittlere Teil durchsetzende Spannschraube oder
aber durch Federelemente fixiert werden können
oder es kann ein die Führungsteile übergreifendes Y-förmiges Profil vorgesehen sein.

Die Führungsteile und die mit ihnen zu verbindenden Enden der Greifarme bestehen vorzugsweise aus ineinanderschiebbaren Rohrprofilen,
während die die Lauffläche des Reifens umgreifenden Teile der Greifarme profiliert oder mit
Versteifungswinkeln versehen sind, um besser in
den Untergrund einzugreifen und sich in den Vertiefungen des Reifenprofils zu verankern.

Die erfindungsgemässe Reifenklammer kann
ganz oder teilweise aus Metall oder Kunststoff
bestehen.

Eine Anzahl, jedoch nur beispielhafter
Ausführungsformen sind in den Zeichnungen dargestellt und anhand dieser nachfolgend näher beschrieben.

Es stellen dar:

Fig. 1  eine Seitenansicht einer drei-

- 5 -

- 5 -

armigen Reifenklammer;

Fig. 2   einen Querschnitt durch einen Teil des Reifens der Felge sowie eine Seitenansicht von Teilen einer erfindungsgemässen Reifenklammer;

Fig. 3   eine Teilansicht zur Illustration der Verstellbarkeit von Führungsteilen und Greifarmen;

Fig. 4   eine Aufsicht auf eine Ausführungsform eines Mittelstücks einer erfindungsgemässen Reifenklammer in Arbeitsstellung;

Fig. 5   den Gegenstand der Fig. 4 in zusammengeklappter Transportstellung;

Fig. 6   ein Schnitt durch das Mittelstück einer Reifenklammer mit 4 schwenkbaren Führungsteilen;

Fig. 7   einen Schnitt durch ein Teil eines Mittelstücks, der vier schwenkbare Führungsteile aufweist;

Fig. 8   den Gegenstand der Fig. 7 in zusammengeklappter Transportstellung;

Fig. 9   eine andere Ausführungsform

- 6 -

eines Mittelstücks mit vier schwenkbaren Führungsteilen;

Fig. 10    eine weitere Ausführungsform zur Verdeutlichung von Möglichkeiten den Schwenkwinkel zu begrenzen;

Fig. 11    eine Aufsicht in Pfeilrichtung XI in Fig. 10;

Fig. 12    in Aufsicht und Vorderansicht
und  13    eine weitere Möglichkeit der Begrenzung des Schwenkwinkels und

Fig. 14    in Vor- und Seitenansicht noch
und  15    eine weitere Möglichkeit der Begrenzung des Schwenkwinkels.

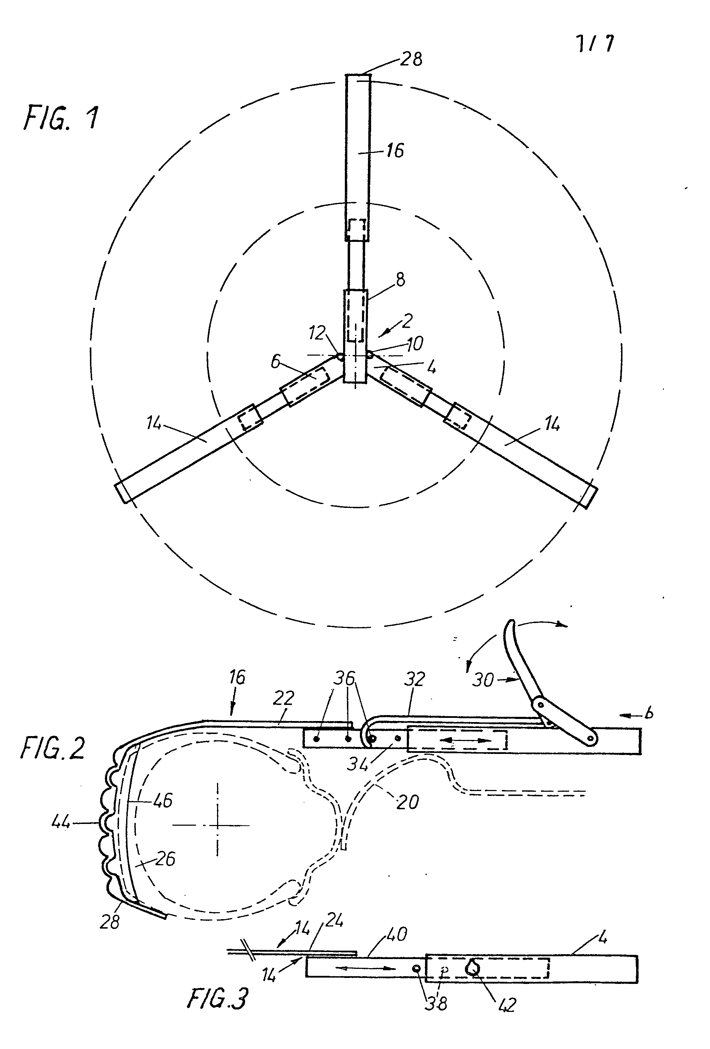

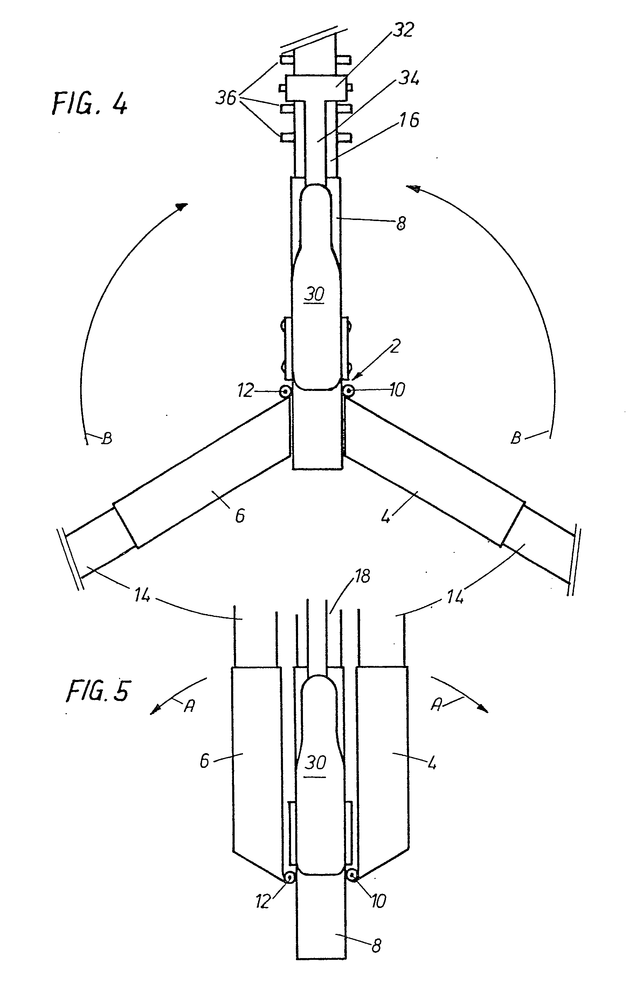

In den Fig. 1 bis 5 ist eine dreiarmige Reifenklammer dargestellt, deren Mittelstück 2, das aus drei in einer gemeinsamen Ebene angeordneten Führungsteilen besteht, wobei die einander gegenüberliegenden seitlichen Führungsteile 4 und 6 gegenüber dem mittleren Führungsteil 8 um Drehlager 10 und 12 zwischen der in den Fig. 1 und 4 dargestellten Arbeitsstellung und der aus Fig. 5 ersichtlichen zusammengeklappter Transportstellung schwenkbar sind.

In die Führungsteile 4, 6 sind identische

- 7 -

Greifarme 14 und in das mittlere Führungsteil
ein Greifarm 16 eingesetzt, die wie die Fig. 2
und 3 zeigen, etwa radial auf der Aussenseite
der Felgen 20 verlaufende Teile 22, 24 sowie
einen die Lauffläche 26 des Reifens umgreifenden Teil 28 aufweisen.

Die Verbindung des Greifarms 16 mit dem
mittleren Führungsteil 8 erfolgt mittels eines
Hebelspanners 30, dessen Spannhaken 32 in eine
leiterartige Einrichtung eingreift, die aus beidseits dem im Führungsteil 8 geführten Ende 34
des Greifarms 16 vorspringenden Bolzen 36 besteht. Hierdurch ergibt sich die Möglichkeit
einer Längsverstellung des Greifarms 16, wodurch die erfindungsgemässe Reifenklammer unterschiedlichen Felgen- und Reifendurchmessern angepasst werden kann.

Die Fig. 3 illustriert die ebenfalls
längsverstellbare Verbindung des Greifarms 14
mit dem zugehörigen schwenkbaren Führungsteil 4
bzw. 6. Hier besteht die leiterartige Einrichtung in einer Lochleiste mit Löchern 38 im Ende
40 des Greifarms 14, das im Führungsteil 4 geführt und mit ihm durch eine Schraube 42 verbunden ist, die eine Bohrung im Teil 4 und
das entsprechende Loch der Lochleiste 38 durchsetzt.

Um die Griffigkeit zu verbessern und gegebenenfalls ein Verrutschen in Umfangsrichtung
des Reifens zu verhindern, ist der die Lauf-

- 8 -

- 8 -

fläche 26 umgreifende Teil 28 des Greifarms durch Vorsprünge 44 profiliert und bzw. oder mit Versteifungswinkeln 46 versehen, die in entsprechende querverlaufende Vertiefungen des Reifenprofils eingreifen und dadurch den Teil 28 gegen Verschiebung in Umfangsrichtung verankern. Selbstverständlich können solche Versteifungswinkel auch an der äusseren Seite des Teiles 28 anstelle der Vorsprünge 44 vorgesehen sein.

Die Benutzung der erfindungsgemässen Reifenklammer ist sehr einfach. Zunächst werden die Führungsteile 4 und 6 vom mittleren Führungsteil 8 in Pfeilrichtung A (Fig. 5) abgeklappt, wobei angenommen wird, dass in sie bereits die Greifarme 14 eingesetzt und der Reifengrösse entsprechend fixiert sind. Die in einem Winkel von etwa 180° gespreizten Teile 4 und 6 werden dann unter das Rad geschoben bis die Teile 28 unterhalb der Lauffläche 26 des Reifens zu liegen kommen. Daraufhin wird der Greifarm 16 von oben auf den Reifen aufgelegt und mit seinem Ende 34 durch Anheben des Mittelstücks 2 in das mittlere Führungsteil 8 eingeführt, der Greifhaken 32 in die der Reifengrösse entsprechenden Bolzen 36 eingehängt und der Hebelspanner 30 gespannt. Diese Arbeit lässt sich in wenigen Minuten und auch bei sehr schlechten Strassen- und Witterungsverhältnissen auch von Laien leicht durchführen.

Die Abnahme und die Aufbewahrung der Reifenklammer erfolgt in umgekehrter Reihenfolge,

- 9 -

- 9 -

wobei im allgemeinen die mit den seitlichen Führungsteilen 4 und 6 verbundenen Greifarme 14
nicht gelöst werden müssen, sondern zusammen
mit den Führungsteilen in Pfeilrichtung B in
die Transportstellung zusammengeklappt werden.
Diese Handhabung gilt sinngemäss auch für die
nachfolgend beschriebenen Ausführungsformen.

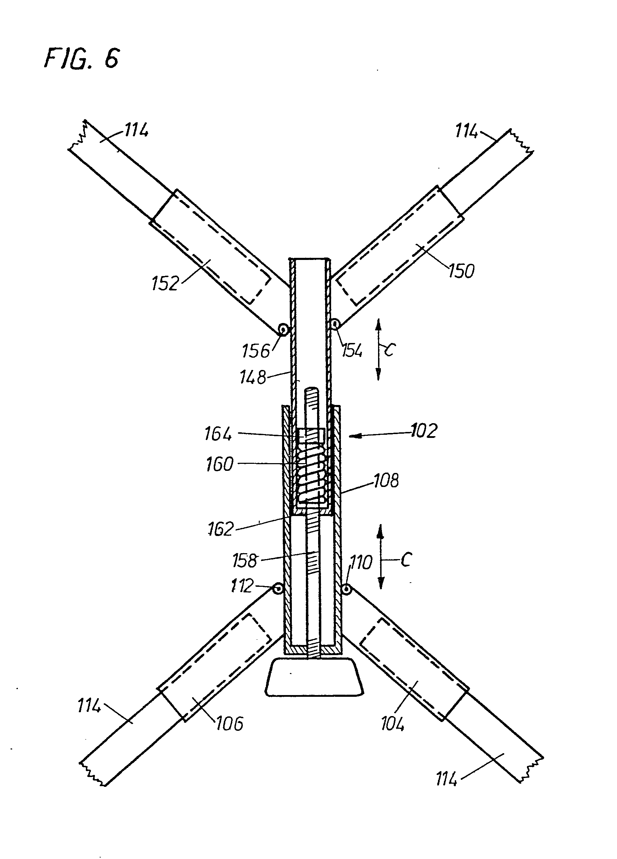

In Fig. 6 ist eine andere Ausführungsform
des Erfindungsgegenstandes gezeigt, wobei um hundert erhöhte Bezugszeichen verwendet werden und
die mit bereits beschriebenen Teilen übereinstimmenden durch gleiche Endziffern erkennbar
sind. Hier besteht das Mittelstück 102 aus zwei
Teilen, nämlich einmal einem mit zwei schwenkbaren
seitlichen Führungsteilen 104 und 106 versehen
mittleren Führungsteil 108 sowie einem in dem
Führungsteil 108 geführten weiteren mittleren
Teil 148 an dem Teil 108 seitliche Führungsteile 150 und 152 um Drehlager 154 und 156 verschwenkbar angebracht sind. Die in die Führungsteile 104, 106, 150 und 152 eingesetzten Greifarme 114 entsprechen dem bereits beschriebenen
Greifarm 14.

Der Ausgleich unterschiedlicher Reifengrösse und die Verbindung der Teile 108 und 148
erfolgt dabei mittels einer Spannschraube 158,
und zwar unter Zwischenschaltung eines Federelements 160 in Form einer Druckfeder, deren
eines Ende an der Stirnfläche 162 des Teiles 148
und deren anderes Ende an einem im Inneren des
Teiles 148 verschiebbaren Teil 164 anliegt, das

- 10 -

mit dem Muttergewinde für die Spannschraube 158 versehen ist. Auf diese Weise entsteht in Richtung der Pfeile C eine elastische Verbindung zwischen dem mittleren Führungsteil 108 und dem in ihm geführten Teil 148 über die das mittlere Führungsteil 108 in Längsrichtung durchsetzende Spannschraube 158 und das Federelement 160 durch die während des Anfahrens auftretende Stösse gedämpft und Verformungen des Reifens ausgeglichen werden können.

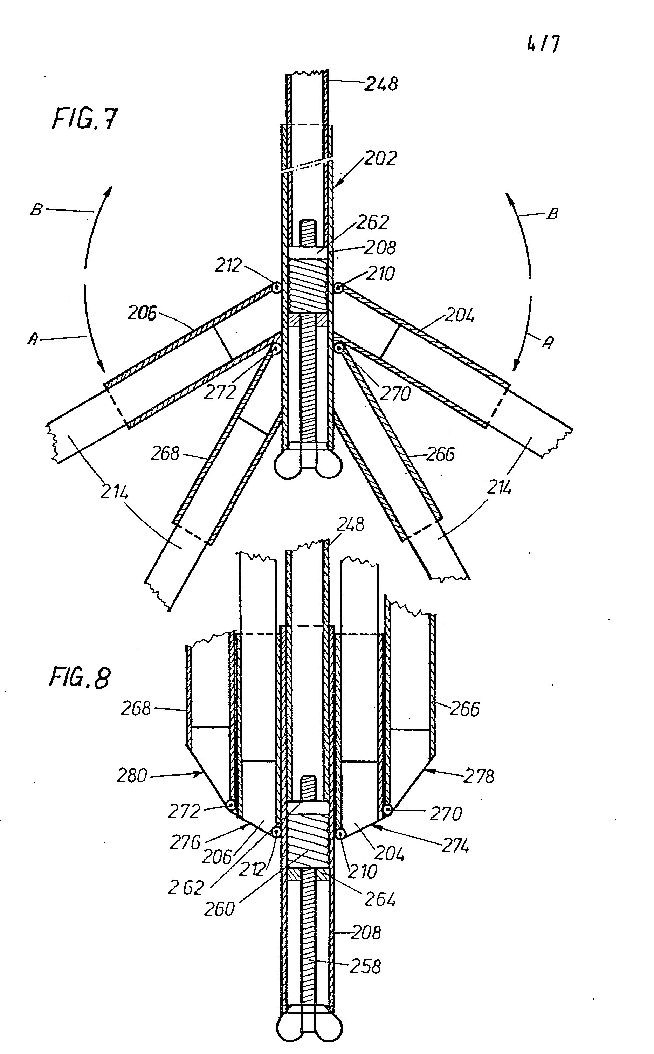

Eine Abwandlung des Gegenstandes der Fig. 6 ist in den Fig. 7 und 8 in auf- und für den Transport zusammengeklapptem Zustand dargestellt, wobei hier die Bezugszeichen erneut um hundert erhöht sind, den bereits beschriebenen Teilen entsprechende, aber wieder die gleichen Endziffern haben.

Das Mittelstück 202 besteht aus zwei Teilen 208 und 248, von welchen aber nur das mittlere Führungsteil 208 vollständig dargestellt ist.

Ein Unterschied zu Fig. 6 ist zunächst einmal darin zu sehen, dass aussen an den seitlichen Führungsteilen 204 und 206 weitere seitliche Führungsteile 266 und 268 um Drehlager 270 und 272 in der gemeinsamen Ebene schwenkbar befestigt sind.

Die Verbindung zwischen den Teilen 208 und 248 längsverstellbar mittels einer das mittlere Führungsstück 208 in Längsrichtung durchsetzenden Spannschraube 258 unter Zwischenschaltung eines Federelements 260, das hier aus einer Zugfeder besteht, deren eines Ende mit der Stirnfläche 262 des Teiles 248 und deren anderes Ende mit einem Teil 264 mit dem Muttergewinde für die Spannschraube 258 verbunden ist. Die Greifarme 214 entsprechen den bereits beschriebenen Greifarmen 14 bzw. 114.

Die Anordnung der entsprechenden vier äusseren Führungsteile am mittleren Teil 248 ist dabei spiegelbildlich die gleiche wie bezüglich der Teile 204, 206, 266 und 268 bezüglich des mittleren Führungsteiles 208 beschrieben.

In dieser Figur ist auch eine Möglichkeit der Fixierung des Schwenkwinkels der schwenkbaren Teile 204, 206, 266 und 268 bezüglich des mittleren Teiles durch Sperren dargestellt, die hier aus den abgeschrägten Enden 274, 276, 278 und 280 bestehen, die sich gegen die Aussenfläche des mittleren Teiles 208 anlegen und den Schwenkwinkel in Richtung des Pfeiles A begrenzen.

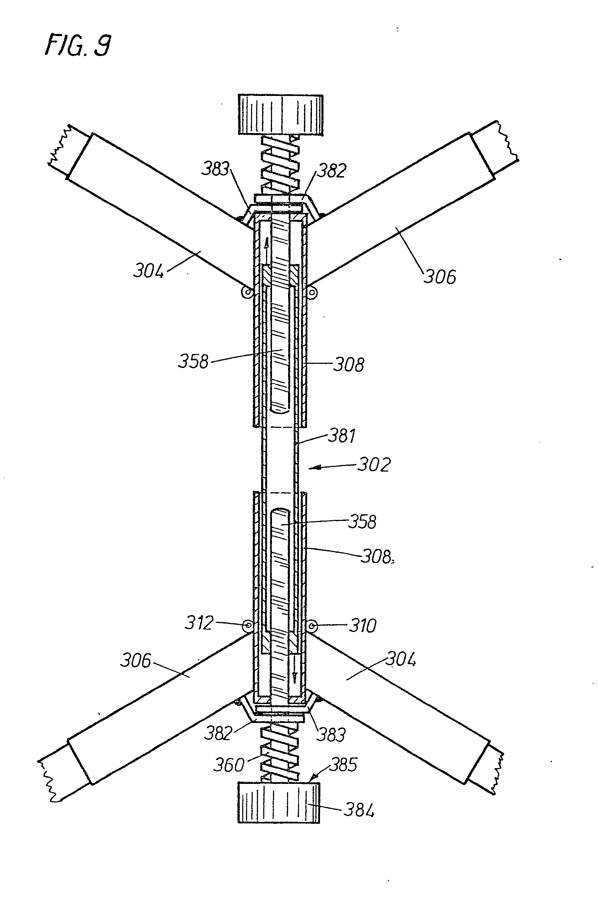

Eine weitere besonders zweckmässige Ausführungsform mit vier schwenkbaren Führungsteilen ist in Figur 9 dargestellt, mit wieder um hundert erhöhten Bezugszeichen und bei bereits beschriebenen Teilen gleichen Endziffern.

Hier besteht das Mittelstück 302 aus drei Teilen, nämlich zwei identischen mittleren Führungsteilen 308, mit schwenkbaren Führungsteilen 304 und 306, die in der bereits mehrfach beschriebenen Weise befestigt sind. Zwischen den beiden mittleren Führungsteilen 308 ist ein Verbindungsteil 381 angeordnet, in dessen beiden Enden die Muttergewinde für die Spannschrauben 358 vorgesehen sind, die die mittleren Führungsteile in Längsrichtung durchsetzen.

Auch hier ist wieder eine Sperre zur Fixierung des Schwenkwinkels vorgesehen, die aber im Gegensatz zu der bezüglich der Fig. 7 beschriebenen, nicht nur den Schwenkwinkel in einer Richtung begrenzt, sondern in beiden. Sie besteht aus in der Nähe der Drehlager 310, 312 an den schwenkbaren Führungsteilen 304 und 306 angebrachten, beispielsweise angeschweissten abgewinkelten Laschen 382 und 383, die einander und das Ende des mittleren Führungsteiles 308 übergreifen und mit fluchtenden Bohrungen versehen sind, die von der das mittlere Teil durchsetzenden Spannschraube 358 fixiert werden.

Das Federelement 360 in Form einer Druckfeder liegt mit einem Ende an einem durch die Innenfläche des Griffs 384 der Spannschraube 358 gebildeten Widerlager 385 an, während sein anderes Ende gegen das Ende des von der Spannschraube durchsetzte Teile drückt.

Es ist offensichtlich, dass diese Ausführungsform nicht nur sehr stabil, sondern auch herstellungstechnisch sehr günstig ist, weil nur verhältnissmässig wenig Teile gefertigt und auf Lager gehalten werden müssen, indem zwei identische abklappbare Teile mittels eines einfachen Verbindungsteiles zu einer vierarmigen Reifenklammer vereinigt werden können. Dabei ist durch die Verdoppelung des Federelements gleichzeitig ein besonders guter Ausgleich von Stössen bzw. Reifenverformungen gegeben.

Zudem ist es auch möglich, in einem mittleren Führungsteil 408 direkt einen Greifarm 14 einzusetzen, wenn dessen Ende 40 anstelle der in Fig. 3 gezeigten Lochleiste mit einem dem Verbindungsteil 381 entsprechenden Muttergewinde für die Spannschraube 358 versehen ist, wodurch eine dreiarmige Reifenklammer entsteht.

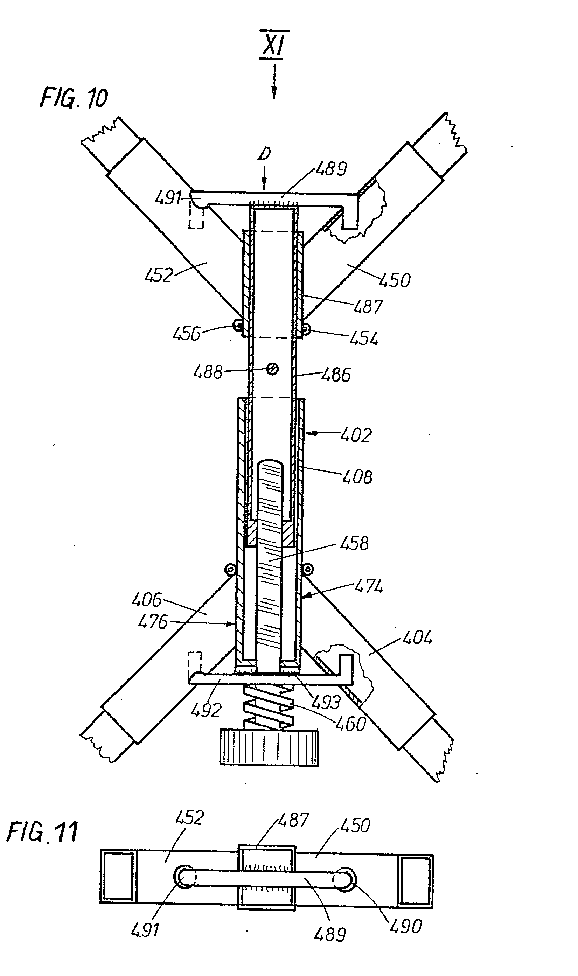

Die in den Fig. 10 und 11 in Seitenansicht und Aufsicht gezeigte Ausführungsform eines Mittelstücks, bei der die Bezugszeichen mit 400 beginnen, ähnelt der nach Fig. 9, was die Ausführung des mittleren Führungsteiles 408 und der seitlichen Führungsteile 404 und 406 betrifft.

Das Mittelstück 402 besteht jedoch nicht wie bei Fig. 9 aus zwei identischen Anordnungen, obwohl dies wie aus der Zeichnung hervorgeht, selbstverständlich möglich wäre, sondern es ist hier in dem Teil 408 ein weiteres mittleres Führungsteil 486 geführt, auf dem eine Führungs-

- 14 -

hülse 487 verschiebbar ist, an welcher äussere
Führungsteile 450 und 452 in der bezüglich der
mittleren Führungsteile beschriebenen Weise um
Drehlager 454, 456 schwenkbar befestigt sind.
Eine Schraube 488 verhindert, dass die Führungshülse bei für den Transport zerlegter Reifenklammer nach einer Richtung auf dem Teil 486
heruntergleiten kann, während dies in der anderen
Richtung durch einen U-förmigen Doppelwinkel 489
verhindert wird, dessen freie Enden in Bohrungen
490 im Teil 450 und 491 im Teil 452 ragen, wodurch der Schwenkwinkel der seitlichen Führungsteile begrenzt wird.

Auch bezüglich der seitlichen Führungsteile 404 und 406 ist eine solche aus einem
U-förmigen Doppelwinkel 492 bestehende Sperre
für die Begrenzung des Schwenkwinkels vorgesehen, die sich von der vorbeschriebenen nur
dadurch unterscheidet, dass der U-förmige
Doppelwinkel 492 in der Mitte abgeflacht oder
auf einer Platte 493 befestigt, z.B. angeschweisst und mit einer Bohrung für den Durchtritt der Spannschraube 458 versehen ist.

Dabei wird durch das Anziehen der Spannschraube 458 der Doppelwinkel 489 in Pfeilrichtung D in die Bohrungen 450 und 452 gezogen,
während die als Federelement 460 wirksame Druckfeder den Doppelwinkel 492, der lose auf die
Spannschraube 458 aufgesteckt ist, in die Bohrungen der Teile 404 und 406 und gegen das Ende
des Führungsteils 408 drückt. Selbstverständlich

- 15 -

- 15 -

können auch andere Sperren zur Begrenzung des Schwenkwinkels vorgesehen sein, etwa die bezüglich der Fig. 9 beschriebenen abgewinkelten Laschen oder z.B. bei den Teilen 404, 406 abgeschrägte Enden 474, 476 gemäss Fig. 8.

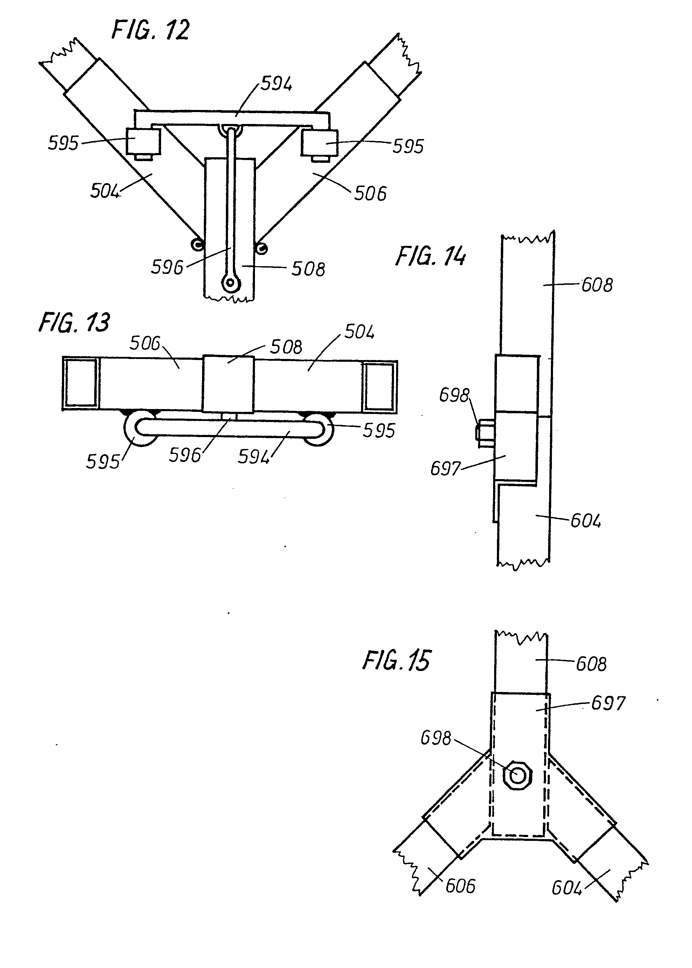

Die Fig. 12 und 13 verdeutlichen eine alternative Ausführungsform einer Sperre zur Begrenzung des Schwenkwinkels der seitlichen Führungsteile 504 und 506 gegenüber dem mittleren Führungsteil 508. Hier greift der U-förmige Doppelwinkel 594 in zwei an den seitlichen Führungsteilen 504 und 506 angebrachten Laschen 595 ein und ist über einem Federelement 596 beispielsweise aus Gummi oder in Form einer Spiralfeder mit dem mittleren Führungsteil 508 verbunden.

Eine weitere Möglichkeit einer Sperre zur Begrenzung des Schwenkwinkels der seitlichen Führungsteile 604 und 606 gegenüber dem mittleren Führungsteil 608 ist in den Fig. 14 und 15 dargestellt und besteht aus einem Y-förmigen Profil 697, das die auseinandergeklappten Teile 604, 606, 608 übergreift und mittels einer Schraubenverbindung 698 auf dem mittleren Führungsteil 608 befestigt ist.

Wie bereits einmal erwähnt, bestehen sowohl die Führungsteile als auch die mit ihnen zu verbindenden Enden 40 der Greifarme vorzugsweise aus ineinander schiebbaren Rohrprofilen, bei dem dargestellten Beispiel aus Vierkantrohren, wodurch eine einfache Herstellung bei

- 16 -

grosser Stabilität und Verdrehungssicherung der Teile gegeneinander gegeben ist, doch können selbstverständlich auch andere Rohrprofile verwendet werden, bzw. die erfindungsgemässe Reifenklammer kann auch aus offenen Profilen oder Vollmaterial hergestellt werden, wie für jeden Fachmann aufgrund vorstehender Beispiele offensichtlich.

- 17 -

Bezugszeichenaufstellung

| 2 | Mittelstück |
|---|---|
| 4 | seitliches Führungsteil |
| 6 | seitliches Führungsteil |
| 8 | mittleres Führungsteil |
| 10 | Drehlager |
| 12 | Drehlager |
| 14 | Greifarm |
| 16 | Greifarm |
| 20 | Felge |
| 22 | Teil von 18 |
| 24 | Teil von 14 |
| 26 | Lauffläche |
| 28 | Teil von 18 |
| 30 | Hebelspanner |
| 32 | Spannhaken |
| 34 | Ende von 18 |
| 36 | Bolzen |
| 38 | Löcher |
| 40 | Ende von 14 |
| 42 | Schraube |
| 44 | Vorsprünge auf 28 |
| 46 | Versteifungswinkel an 28 |
| 102 | Mittelstück |
| 104 | seitliches Führungsteil |
| 106 | seitliches Führungsteil |

0037512

— 18 —

| | |
|---|---|
| 108 | mittleres Führungsteil |
| 114 | Greifarm |
| 148 | weiteres mittleres Teil |
| 150 | seitliches Führungsteil |
| 152 | seitliches Führungsteil |
| 154 | Drehlager |
| 156 | Drehlager |
| 158 | Spannschraube |
| 160 | Federelement (Druckfeder) |
| 162 | Stirnfläche von 148 |
| 164 | Teil mit Muttergewinde für 158 |
| 202 | Mittelstück |
| 204 | seitliches Führungsteil |
| 206 | seitliches Führungsteil |
| 208 | mittleres Führungsteil |
| 248 | weiteres mittleres Teil |
| 258 | S p annschraube |
| 260 | Federelement (Zugfeder) |
| 262 | Stirnfläche von 248 |
| 264 | Teil mit Muttergewinde für 258 |
| 266 | seitliches Führungsteil |
| 268 | seitliches Führungsteil |
| 270 | Drehlager |
| 272 | Drehlager |
| 274 | abgeschrägtes Ende von 204 |

- 19 -

| 276 | abgeschrägtes Ende von 206 |
| 278 | abgeschrägtes Ende von 266 |
| 280 | abgeschrägtes Ende von 268 |
| 302 | Mittelstück |
| 304 | seitliches Führungsteil |
| 306 | seitliches Führungsteil |
| 308 | mittleres Führungsteil |
| 310 | Drehlager |
| 312 | Drehlager |
| 358 | Spannschrauben |
| 360 | Federelement (Druckfeder) |
| 381 | Verbindungsteil |
| 382 | Lasche |
| 383 | Lasche |
| 384 | Griff von 358 |
| 385 | Widerlager |
| 402 | Mittelstück |
| 404 | seitliches Führungsteil |
| 406 | seitliches Führungsteil |
| 408 | mittleres Führungsteil |
| 450 | äusseres Führungsteil |
| 452 | äusseres Führungsteil |
| 454 | Drehlager |
| 456 | Drehlager |
| 458 | Spannschraube |

0037512

— 20 —

| | |
|---|---|
| 460 | Federelement (Druckfeder) |
| 474 | abgeschrägtes Ende von 404 |
| 476 | abgeschrägtes Ende von 406 |
| 486 | mittleres Führungsteil |
| 487 | Führungshülse |
| | |
| 488 | Schraube |
| 489 | U-förmiger Doppelwinkel |
| 490 | Bohrung in 450 |
| 491 | Bohrung in 452 |
| 492 | U-förmiger Doppelwinkel |
| | |
| 493 | Platte |
| 504 | seitliches Führungsteil |
| 506 | seitliches Führungsteil |
| 508 | mittleres Führungsteil |
| 594 | U-förmiger Doppelwinkel |
| | |
| 595 | Laschen |
| 596 | Federelement (Druckfeder) |
| 604 | seitliches Führungsteil |
| 606 | seitliches Führungsteil |
| 608 | mittleres Führungsteil |
| | |
| 697 | Y-förmiges Profil |
| 698 | Schrauben-Mutterverbindung |

- 1 -

Patentansprüche

1. Reifenklammer zur Verhinderung des Durchdrehens der Antriebsräder von Kraftfahrzeugen, mit mehreren auf der Felgenaussenseite etwa radial verlaufenden und die Lauffläche des Reifens umgreifenden Greifarmen, g e k e n n - z e i c h n e t durch ein Mittelstück mit mindestens drei in einer gemeinsamen Ebene angeordneten Führungsteilen, wobei die einander gegenüberliegenden äusseren zu dem mittleren um Drehlager in der gemeinsamen Ebene schwenkbar und das Ende je eines Greifarms führend mit diesem verbunden sind.

2. Reifenklammer nach Anspruch 1, dadurch g e k e n n z e i c h n e t , dass auch das mittlere Führungsteil das Ende eines Greifarms führt und mit ihm verbunden ist.

3. Reifenklammer nach Anspruch 1, dadurch g e k e n n z e i c h n e t , dass das mittlere Führungsteil (308) über ein Verbindungsteil (381) mit einem zweiten mittleren Führungsteil (308) einer gleichartigen aus mindestens drei in einer Ebene angeordneten Führungsteilen (304, 306, 308) bestehenden Anordnung verbunden ist.

- 2 -

4.    Reifenklammer nach Anspruch 1, dadurch g e k e n n z e i c h n e t , dass das mittlere Führungsteil (108) ein weiteres mittleres Teil (148) führt und mit diesem verbunden ist, zu dem in einer gemeinsamen Ebene mindestens zwei einander gegenüberliegende seitliche Führungsteile (150, 152) um Drehlager (154, 156) schwenkbar und das innere Ende je eines Greifarms (114) führend mit diesem verbunden sind.

5.    Reifenklammer nach Anspruch 1, dadurch g e k e n n z e i c h n e t , dass an den zu dem mittleren Führungsteil (208) schwenkbaren seitlichen Führungsteilen (204, 206) weitere Führungsteile (266, 268) ebenfalls in der gemeinsamen Ebene schwenkbar angebracht sind.

6.    Reifenklammer nach Anspruch 1, dadurch g e k e n n z e i c h n e t , dass das mittlere Führungsteil (408) direkt ein weiteres mittleres Führungsteil (486) aufnimmt, auf dem eine Führungshülse (487) in Längsrichtung verschiebbar ist, an der weitere seitliche Führungsteile (450, 452) in der gemeinsamen Ebene schwenkbar befestigt sind.

7.    Reifenklammer nach Anspruch 1, dadurch g e k e n n z e i c h n e t , dass zum

- 3 -

Ausgleich unterschiedlicher Rad- und Reifengrössen die Verbindung zwischen den Greifarmen und den Führungsteilen verstellbar ausgebildet ist.

8. Reifenklammer nach Anspruch 7, dadurch g e k e n n z e i c h n e t , dass die leiterartigen Einrichtungen beidseits aus dem Ende (34) des Greifarms (16) vorspringenden Bolzen (36) bestehen.

9. Reifenklammer nach Anspruch 7, dadurch g e k e n n z e i c h n e t , dass für die Verstellung leiterartige Einrichtungen, z.B. Lochleisten vorgesehen sind.

10. Reifenklammer nach Anspruch 9, dadurch g e k e n n z e i c h n e t , dass die in den äusseren, schwenkbaren Führungsteilen aufgenommenen Enden (40) der Greifarme (14) mit Lochleisten versehen sind.

11. Reifenklammer nach Anspruch 7, dadurch g e k e n n z e i c h n e t , dass für die Verstellung in Längsrichtung der Führungsteile verlaufende Spannschrauben vorgesehen sind.

- 4 -

12. Reifenklammer nach den Ansprüchen 3 und 11, dadurch g e k e n n z e i c h n e t , dass die Spannschrauben die mittleren Führungsteile (308) in Längsrichtung durchsetzen und die Enden des Verbindungsteils (381) das entsprechende Muttergewinde haben.

13. Reifenklammer nach den Ansprüchen 4 und 11, dadurch g e k e n n z e i c h n e t , dass die Spannschraube (158) das mittlere Führungsteil (108) in Längsrichtung durchsetzt und das in ihm geführte Ende des weiteren mittleren Teils (148) das entsprechende Muttergewinde hat.

14. Reifenklammer nach den Ansprüchen 2 und 11, dadurch g e k e n n z e i c h n e t , dass die Spannschraube das mittlere Führungsteil in Längsrichtung durchsetzt und das in ihm geführte Ende des Greifarms das entsprechende Muttergewinde hat.

15. Reifenklammer nach Anspruch 1, dadurch g e k e n n z e i c h n e t , dass zur Verbindung mindestens eines der Führungsteile (8) mit dem in ihm geführten Teil (16) ein Hebelspanner (30) vorgesehen ist.

0037512

16.    Reifenklammer nach Anspruch 1, dadurch g e k e n n z e i c h n e t , dass zur Dämpfung von Stössen und zum Ausgleich der Verformung des Reifens die Verbindung der Führungsteile mit den in ihnen geführten Teilen mindestens ein Federelement einschliesst.

17.    Reifenklammer nach den Ansprüchen 11 und 16, dadurch g e k e n n z e i c h n e t , dass das zur Spannschraube (258) gehörige Muttergewinde über das Federelement (260) mit dem zugehörigen Teil (248) verbunden ist.

18.    Reifenklammer nach den Ansprüchen 11 und 16, dadurch g e k e n n z e i c h n e t , dass die Spannschraube (358, 458) an ihrem äusseren Ende ein Widerlager (385) aufweist, an dem ein Ende des Federelements (360, 460) anliegt, während das zweite gegen das von der Spannschraube durchsetzte Teil (382, 492) drückt.

19.    Reifenklammer nach Anspruch 1, dadurch g e k e n n z e i c h n e t , dass die schwenkbaren Teile des Mittelstücks mit Sperren zur Fixierung des Schwenkwinkels versehen sind.

20.    Reifenklammer nach Anspruch 19, dadurch g e k e n n z e i c h n e t , dass die

- 6 -

Sperren aus den abgeschrägten Enden (274, 276, 278, 280, 474, 476) der schwenkbaren Teile (204, 206, 266, 268, 404, 406) bestehen, die sich gegen das mittlere Teil (208, 408) anlegen.

21.    Reifenklammer nach Anspruch 19, dadurch g e k e n n z e i c h n e t , dass die Sperren aus in der Nähe der Drehlager (310, 312) von schwenkbaren Teilen (304, 306) angebrachten, einander und das Ende des mittleren Teils (308) übergreifenden Laschen (382, 383) bestehen, die mit fluchtenden Bohrungen versehen sind, die von der das mittlere Teil (308) durchsetzenden Spannschraube (358) fixiert werden.

22.    Reifenklammer nach Anspruch 19, dadurch g e k e n n z e i c h n e t , dass die Sperren aus U-förmigen Doppelwinkeln (489, 492, 594) bestehen, die in Bohrungen (490, 491) Vertiefungen oder Laschen (595) eingreifen, die in oder an den schwenkbaren Teilen (450, 452, 504, 506) angebracht sind.

23.    Reifenklammer nach Anspruch 22, dadurch g e k e n n z e i c h n e t , dass die Doppelwinkel (492) mit einer Bohrung versehen sind, durch die die das mittlere Teil (408) durchsetzende Spannschraube (458) hindurchgeht.

- 7 -

- 7 -

24.    Reifenklammer nach Anspruch 22, dadurch g e k e n n z e i c h n e t , dass die
Doppelwinkel (594) über Federelemente (596) mit
dem mittleren Teil (508) verbunden sind.

25.    Reifenklammer nach Anspruch 19, dadurch g e k e n n z e i c h n e t , dass die
Sperren aus einem U-förmigen Profil (697) bestehen, dass die auseinandergeklappten Führungsteile (604, 606, 608) übergreift, und mittles
einer Schraubverbindung (698) auf dem mittleren
Führungsteil (608) befestigt ist.

26.    Reifenklammer nach Anspruch 1, dadurch g e k e n n z e i c h n e t , dass der
die Lauffläche (26) des Reifens umgreifende Teil
(28) der Greifarme (16) profiliert oder mit Versteifungswinkel (46) versehen ist.

27.    Reifenklammer nach Anspruch 1, dadurch g e k e n n z e i c h n e t , dass die
Führungsteile aus Rohrprofilen bestehen.

28.    Reifenklammer nach Anspruch 27, dadurch g e k e n n z e i c h n e t, dass die
mit den Führungsteilen zu verbindenden Enden
(34, 40) der Greifarme (14, 16) ebenfalls aus
Rohrprofilen bestehen.

*FIG. 1*

*FIG.2*

*FIG.3*

FIG. 4

32

36

34

16

8

30

2

12    10

B

B

6

4

14    18    14

FIG. 5

A    A

6    4

30

12    10

8

FIG. 6

FIG.7

FIG.8

FIG. 9

FIG.10

FIG.11

FIG. 12

594
595
595
504
506
596
508

FIG. 14

608
698
697
604

FIG. 13

506
508
504
595
595
596
594

FIG. 15

608
697
698
606
604

0037512

**EUROPÄISCHER RECHERCHENBERICHT**

Europäisches
Patentamt

Nummer der Anmeldung

EP 81 10 2197

| | EINSCHLÄGIGE DOKUMENTE | | KLASSIFIKATION DER ANMELDUNG (Int Cl ⁹) |
|---|---|---|---|
| Kategorie | Kennzeichnung des Dokuments mit Angabe, soweit erforderlich, der maßgeblichen Teile | betrifft Anspruch | |
| X | <u>US - A - 3 211 205</u> (MANDATO) <br> * Spalte 2, Zeile 14 - Spalte 3, Zeile 65; Figuren 1-4 * | 1,2, 11,19, 22 | B 60 C 27/04 <br> 27/10 <br> 27/12 |
| X | <u>US - A - 3 283 798</u> (MANDATO) <br> * Spalte 2, Zeile 31 - Spalte 4, Zeile 9; Figuren 1-4 * | 1,2, 11,19, 22,26 | |
| X | <u>US - A - 2 640 522</u> (SCHROEN) <br> * Spalte 1, Zeile 55 - Spalte 3, Zeile 50  Figuren 1-3 * | 1,3-5, 9,26 | RECHERCHIERTE SACHGEBIETE (Int. Cl ⁹) <br><br> B 60 C 27/ |
| X | <u>CH - A - 525 103</u> (RUEGG) <br> * Spalte 2, Zeile 4 - Spalte 3, Zeile 27; Figuren 1,2 * | 1,3,4, 6,7, 16,24, 26 | |
| X | <u>US - A - 2 744 558</u> (CIAVOLA <br> * Spalte 1, Zeile 53 - Spalte 4, Zeile 5; Figuren 1,2 * | 1,2,7, 9,11, 14,15 | |
| X | <u>US - A - 2 597 458</u> (CUMMINS) <br> * Spalte 1, Zeile 36 - Spalte 2, Zeile 29; Figuren 1-5 * | 1,2, 11,14, 16 | KATEGORIE DER GENANNTEN DOKUMENTE <br> X: von besonderer Bedeutung <br> A: technologischer Hintergrund <br> O: nichtschriftliche Offenbarung <br> P: Zwischenliteratur |
| X | <u>US - A - 2 510 451</u> (WILLIAMS) <br> * Spalte 3, Zeile 5 - Spalte 5, Zeile 20; Figuren 1-7 * | 1,2,7, 11,14, 15,19, 20 | T: der Erfindung zugrunde <br> , liegende Theorien oder <br> , Grundsätze <br> E: kollidierende Anmeldung <br> D: in der Anmeldung angeführtes <br> Dokument <br> L: aus anderr Grunden |
| X | <u>US - A - 3 283 796</u> (WHITE) <br> ./. | 1,3,6, 7,9, | angeführtes Dokument <br> &: Mitglied der gleichen Patent- |

Der vorliegende Recherchenbericht wurde für alle Patentansprüche erstellt.

| Recherchenort | Abschlußdatum der Recherche | Prüfer |
|---|---|---|
| Den Haag | 03-07-1981 | AYITER |

EPA form 1503.1   06.78

**0037512**

Europäisches
Patentamt

**EUROPÄISCHER RECHERCHENBERICHT**

Nummer der Anmeldung

EP 81 10 2197

-2-

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | * Spalte 2, Zeile 67 - Spalte 3, Zeile 53; Figuren 1-3 * | 15,16 | |
| | -- | | |
| A | DE - A - 2 742 519 (SKETEC-VESOV) | 1 | |
| | * Seite 4, Zeilen 12-21; Figuren 1-3 * | | |
| | -- | | |
| A | US - A - 3 186 467 (TREIBER) | 1,19, 20,26 | |
| | * Spalte 2, Zeilen 5-58; Figuren 1,2 * | | RECHERCHIERTE SACHGEBIETE (Int. Cl. 3) |
| | -- | | |
| A | DE - A - 1 955 289 (FRIEDLI) | 1,3 | |
| | * Seite 2, Zeilen 13-22; Figuren 1-3 * | | |
| | -- | | |
| A | US - A - 2 806 503 (HAMERSKI) | 1 | |
| | * Spalte 2, Zeile 44 - Spalte 4, Zeile 44; Figuren 1,2 * | | |
| | -- | | |
| A | US - A - 2 427 510 (RICHARDSON) | 1 | |
| | * Spalte 2, Zeile 48 - Spalte 3, Zeile 4; Figuren 1,3 * | | |
| | ---- | | |

EPA Form 1503.2   06.78